# EUROPÄISCHE PATENTSCHRIFT

(11) **EP 2 044 343 B1**
(45) Veröffentlichungstag und Bekanntmachung des Hinweises auf die Patenterteilung: **01.06.2011**
(21) Anmeldenummer: 07765413.5
(22) Anmeldetag: 14.06.2007
(51) Int. Cl.: F16C 19/30, F16C 33/66, F16C 33/76, F16C 33/80, F16C 33/54, F16C 33/58

(54) **AXIALWÄLZLAGER**
AXIAL ROLLING BEARING
PALIER A ROULEMENT AXIAL

(30) Priorität: 17.07.2006 US 807562 P; 22.08.2006 US 823153 P
(43) Veröffentlichungstag der Anmeldung: 08.04.2009
(73) Patentinhaber: Schaeffler Technologies GmbH & Co. KG, 91074 Herzogenaurach (DE)
(72) Erfinder: BROWN, James Kevin, Rock Hill, South Carolina 29730 (US); HARRIS, Scott, The Woodlands TX 77382 (US); CLARK, Eric, Rock Hill, South Carolina 29732 (US)
(86) Internationale Anmeldenummer: PCT/EP2007/055880
(87) Internationale Veröffentlichungsnummer: WO 2008/009517

(56) Entgegenhaltungen:
- WO-A-03/067107
- US-A- 4 659 050

## Beschreibung

### Gebiet der Erfindung

Die Erfindung betrifft ein Axialwälzlager, bestehend aus einem Wälzkörper enthaltenden Käfig, der zwischen zwei Laufscheiben angeordnet ist, wobei die Laufscheiben je einen eine Laufbahn bildenden Radialabschnitt und je einen sich daran anschließenden axial ausgerichteten radial äußeren Bord aufweisen, die sich in axialer Richtung überlappen, wobei die radial äußere Laufscheibe einen größeren Durchmesser aufweist als die radial innere Laufscheibe, und bei dem wenigstens die radial innere Laufscheibe ein radial inneres, axial verlaufendes Bord aufweist, welches sich dem die Laufbahn bildenden Radialabschnitt anschließt.

### Hintergrund der Erfindung

Die DE 102 58 823 A1 beschreibt ein Axialwälzlager, das für Wandlergetriebe von Automobilen geeignet sein soll, deren Laufscheiben mit äußeren axial abgewinkelten und gegeneinander gerichteten Borden versehen sind, welche jeweils Durchbrechungen aufweist, die ein Durchströmen des Axialwälzlagers mit Schmiermittel erleichtern sollen. Das Durchströmen von Schmiermitteln durch das Axialwälzlager soll dort durch besonders große Öffnungen erleichtert werden, da in der DE 102 58 823 A1 als Nachteil des Standes der Technik angegeben wird, dass bislang bekannte technische Lösungen für das Schmiermittel einen zu hohen Strömungswiderstand entgegenbringen würden, welches zum Abreißen des Schmiermittelfilms führen kann.

Ein gattungsgemäßes Axialwälzlager ist aus der US 4,659,050 mit Bezug auf die dortige Figur 12 bekannt. Bei diesem Axialwälzlager, als dessen Vorteile geringe Fertigungskosten genannt sind, werden als Wälzkörper Kugeln verwendet, so dass dieses Axialwälzlager nicht für alle Anwendungsgebiete eingesetzt werden kann.

Aus der DE 196 18 216 B4 ist ein Axialwälzlager mit einem Käfig und in Käfigtaschen enthaltenen Wälzkörpern bekannt, wobei der Käfig zwischen zwei planparallelen, insbesondere aus Blech gebildeten Laufscheiben angeordnet ist. Diese drei Bauteile sind durch gegenseitiges formschlüssiges Hintergreifen zu einer Baueinheit zusammengefasst. Dabei geht wenigstens die erste Laufscheibe an einer peripheren Kante in einen axial gerichteten, den Käfig mit Spiel umgreifenden Kragen über, der sich in Richtung einer Radialebene der zweiten Laufscheibe erstreckt, so dass zumindest ein Ringspalt entsteht. Der Käfig weist in Längsschnitt eine Sigma-Form auf und ist mit im Bereich des Ringspaltes mit radial von den Taschen beabstandeten Durchtrittsöffnungen versehen. Auch mit dieser Konstruktion soll der Strömungswiderstand für das Schmiermittel verringert werden, wobei als Grund für den Strömungswiderstand die engen radialen und axialen Spalten zwischen den Laufscheiben und dem Käfig sowie die engen Freiräume zwischen den Wälzkörpern und den Taschen des Käfigs angegeben wird.

Eine andere technische Lösung, die ebenfalls ein möglichst ungehindertes und gerichtetes Durchströmen des Schmiermittels durch ein Axialwälzlager ermöglichen soll, ist in der DE 103 13 183 A1 beschrieben. Dort ist ein radial äußeres Bord der radial äußeren Laufscheibe zu einem axialen Flansch verlängert. Der an das Bord sich anschließende Flansch wirkt als Leitblech für den Schmiermittelstrom und sorgt für dessen gerichteten Austritt aus dem Lager.

Soweit sich die beschriebenen Bauformen auf die Verwendung von Axialwälzlagern in Getrieben von Automobilen beziehen, werden bislang möglichst offene Strukturen bevorzugt, durch die Schmiermittel, welches zur Schmierung des Axialwälzlagers und zur Schmierung anderer Komponenten des Getriebes benötigt wird, möglichst widerstandslos hindurch strömen kann. Derartige strömungsoffene Strukturen haben aber nicht nur Vorteile. Durch die strömungsoffene Strukturen kann es nämlich auch zu einem vergleichsweise hohen Verbrauch an Schmiermitteln kommen, welcher von hydraulischen Pumpen im Getriebe umgewälzt bzw. in das Getriebe eingepumpt wird. Je weniger Strömungswiderstand die Axialwälzlager aufweisen, umso höher muss die Menge an umgewälztem Schmiermittel sein, welches eine Pumpe mit relativ hoher Leistung erforderlich macht. Ferner konnte ermittelt werden, dass herkömmliche Axialwälzlager ab einer bestimmten Rotationsgeschwindigkeit selbst als Pumpe wirken, wodurch die Menge umzuwälzenden Schmiermittels weiter erhöht wird. Bislang wurde also die Durchflussrate als Resultierende, aber nicht als Determinante betrachtet.

Aus diesem Grunde würde eine verringerte Durchflussmenge an Schmiermittel zu einem höheren Wirkungsgrad der gesamten Getriebestruktur führen.

### Aufgabe der Erfi ndu ng

Der Erfindung liegt die Aufgabe zugrunde, ein Axialwälzlager zu schaffen, das die geschilderten Nachteile beseitigt. Insbesondere soll das Lager einen vorbestimmbaren Schmiermitteldurchfluss aufweisen, der beispielsweise nur derjenigen Schmiermittelmenge entspricht, die das Lager zum störungsfreien Betrieb selbst braucht. Bei einer anderen Einstellung soll ein anderer Schmiermittelstrom durch das Axiallager realisierbar sein.

### Zusammenfassung der Erfindung

Der Erfindung liegt die Erkenntnis zugrunde, dass sich die gestellte Aufgabe auf überraschend einfache Art und Weise dadurch lösen lässt, dass die radialen und axialen Geometrien der Laufscheiben und des Käfigs derart aufeinander abgestimmt werden, dass eine Labyrinthdichtung imitiert wird, welche eine Drossel für den Schmiermittelfluss bildet.

Die Erfindung geht gemäß den Merkmalen des Hauptanspruchs aus von einem Axialwälzlager, bestehend aus einem Wälzkörper enthaltenden Käfig, der zwischen zwei Laufscheiben angeordnet ist, wobei die Laufscheiben je einen eine Laufbahn bildenden Radialabschnitt und je einen sich daran anschließenden axial ausgerichteten radial äußeren Bord aufweisen, die sich in axialer Richtung überlappen, wobei die radial äußere Laufscheibe einen größeren Durchmesser aufweist als die radial innere Laufscheibe, und bei dem wenigstens die radial innere Laufscheibe ein radial inneres, axial verlaufendes Bord aufweist, welches sich dem die Laufbahn bildenden Radialabschnitt anschließt.

Außerdem ist vorgesehen, dass das radial innere Bord der inneren Laufscheibe nach axial außen gerichtet und zu einem Flansch verlängert ist, dass der Käfig einen radial äußeren Abschnitt aufweist, welcher sich gegen das radial äußere Bord der radial inneren Laufscheibe abstützt, und dass der Käfig einen radial inneren Abschnitt aufweist, welcher zu einem nach axial außen gerichteten Bord abgewinkelt ausgebildet ist, wobei der Flansch der radial inneren Laufscheibe und das Bord des Käfigs zur Bildung einer Labyrinthdichtung die gleiche axiale Richtung aufweisend ausgebildet sind.

Durch diesen Aufbau wird vorteilhaft erreicht, dass möglichst viele axiale Überlappungen gebildet sind, welche ein weitgehend ungehindertes Durchströmen des Axialwälzlagers unmöglich machen. Der Schmiermittelstrom wird so oft es geht umgelenkt, so dass er durch das Axialwälzlager nur über einen vergleichsweise langen Weg passieren kann. Gleichwohl bleibt aber die grundsätzliche Versorgung des Axialwälzlagers mit Schmierstoff erhalten.

Dadurch, dass der radial innere Bord der inneren Laufscheibe nach axial außen gerichtet und zu einem Flansch verlängert ist, wird eine besonders wirksame Reduzierung der Schmiermittel-Durchflussrate erzielt. Dieser Flansch dient quasi als Leitblech, wodurch dem Schmiermittel eine bestimmte Strömungsrichtung gegeben wird. Außerdem kann dieser Ring-Flansch genutzt werden, um das Axialwälzlager auf einfachste Weise mit einem Gehäuseteil, beispielsweise eines Wandlergetriebes, zu verbinden.

In Untersuchungen mit einem erfindungsgemäßen Axiallager hat sich überraschend herausgestellt, dass sich die Schmiermittel-Durchflussmenge durch das Axialwälzlager gezielt beeinflussen lässt, und zwar sowohl auf einen bestimmten Volumenstrom pro Minute bei vorgegebenen Druck, als auch umgekehrt.

Außerdem kann vorgesehen sein, dass ein axial äußerer Abschnitt der radial äußeren Laufscheibe nach axial innen zur Bildung eines Bordes abgewinkelt ist, wobei dieses Bord wenigstens radial vom radial inneren Bord der inneren Laufscheibe beabstandet ist und das nach axial außen gerichtete Bord des Käfigs überdeckt, wobei zwischen den Borden ein Spalt verbleibt.

In anderen praktischen Weiterbildungen kann vorgesehen sein, dass das als Flansch ausgebildete Bord der radial äußeren Laufscheibe den Flansch der radial inneren Laufscheibe zumindest teilweise axial und radial überdeckt, wobei zwischen den Flanschen ein Spalt ausgebildet ist.

Eine andere Ausgestaltung der Erfindung sieht vor, dass der Flansch der radial inneren Laufscheibe an seinem axialen Ende radial nach innen zu einem Rand abgewinkelt ist, wobei eine Kante dieses Randes und eine radiale Unterseite des Flansches der radial äußeren Laufscheibe auf etwa gleicher radialer Höhe sind, wobei zwischen dem Rand der radial inneren Laufscheibe und dem Flansch der radial äußeren Laufscheibe ein Spalt ausgebildet ist.

Ebenso liegt es im Rahmen der Erfindung vorzusehen, dass das Bord des radial inneren Abschnitts des Käfigs mit einer doppelten axial-radialen Abwinklung versehen ist, welche aus einem radial nach innen weisenden Abschnitt und aus einem axialem Flansch besteht, wobei dieser Flansch den Flansch der radial inneren Laufscheibe zumindest teilweise radial und axial überdeckt.

Diese Ausgestaltung lässt sich noch dadurch ergänzen, dass der axiale Abstand zwischen dem Flansch der radial inneren Laufscheibe und dem Flansch des Käfigs gleich Null ist.

In einer besonders praktischen Weiterbildung der Erfindung ist vorgesehen, dass der axial äußere Abschnitt der radial äußeren Laufscheibe eine axial nach innen gerichtete Abwinklung in Form eines Bordes aufweist, dessen Unterkante auf gleicher radialer Höhe angeordnet ist wie eine Unterkante des Flansches des Käfigs.

Ebenso vorteilhaft ist eine Ausgestaltung der Erfindung, die sich dadurch auszeichnet, dass zwischen dem radial nach innen weisenden Abschnitt des Bordes des Käfigs und einer Stirnkante des Bordes der radial äußeren Laufscheibe ein Spalt ausgebildet ist.

Es liegt ebenso im Rahmen der Erfindung vorzusehen, dass in den axial äußeren Abschnitt der radial äußeren Laufscheibe wenigstens eine Öffnung oder Bohrung eingebracht ist.

Diese Ausgestaltung lässt sich auch noch dadurch ergänzen, dass das nach axial innen gerichtete Bord der radial äußeren Laufscheibe wenigstens eine radial verlaufende Bohrung aufweist, wobei sich noch dadurch ergänzen lässt, dass die Bohrung des nach axial innen gerichteten Bordes der radial äußeren Laufscheibe einen geringeren Durchmesser als die Bohrung im axial äußeren Abschnitt dieser Laufscheibe aufweist.

Andere praktische Ausgestaltungen der Erfindung zeichnen sich dadurch aus, dass das radial äußere und axial ausgerichtete Bord der radial äußeren Laufscheibe radial außen einen nasenartigen Vorsprung aufweist, welcher aus mehreren in Umfangsrichtung gleichmäßig voneinander beabstandeten Haltenasen besteht oder als ein sich um 360° erstreckender radialer Rand ausgebildet ist.

Ebenfalls im Rahmen der Erfindung liegt es, dass die Wälzkörper als Nadeln oder Rollen ausgebildet sind. Ebenso praktisch ist eine Weiterbildung der Erfindung, bei welcher vorgesehen ist, dass der Käfig Taschen mit einer Anzahl N auf weist, wobei die Anzahl der in den Taschen eingesetzten Wälzkörper der Anzahl N entspricht.

Besonders vorteilhaft ist schließlich eine Ausgestaltung der Erfindung, die sich dadurch auszeichnet, dass der Käfig Taschen mit einer Anzahl N auf weist, wobei die Anzahl der in den Taschen eingesetzten Wälzkörper N - n beträgt, wobei n ≥1.

### Kurze Beschreibung der Zeichnungen

Die Erfindung wird im Folgenden anhand der beiliegenden Zeichnung näher erläutert. Darin zeigt
- Fig. 1: eine Querschnittansicht durch ein erstes Axialwälzlager gemäß der Erfindung,
- Fig. 2: eine Querschnittansicht durch ein zweites Axialwälzlager gemäß der Erfindung,
- Fig. 3: eine Querschnittansicht durch ein drittes Axialwälzlager gemäß der Erfindung,
- Fig. 4: eine Querschnittansicht durch ein viertes Axialwälzlager gemäß der Erfindung,
- Fig. 5: eine Querschnittansicht durch ein fünftes Axialwälzlager gemäß der Erfindung,
- Fig. 6: eine Querschnittansicht durch ein sechstes Axialwälzlager gemäß der Erfindung,
- Fig. 7: eine Querschnittansicht durch ein siebtes Axialwälzlager gemäß der Erfindung, und
- Fig. 8a, 8b: Tabellen von Durchflussmengen.

### Detaillierte Beschreibung der Zeichnung

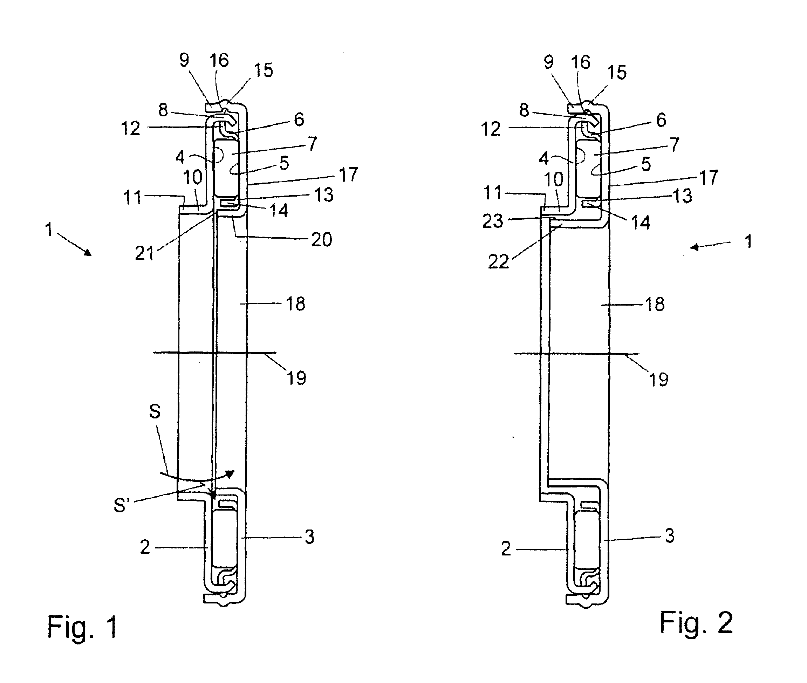

In den Figuren 1 bis 5 sind unterschiedliche Ausführungsbeispiele jeweils eines erfindungsgemäßen Axialwälzlagers 1 dargestellt, welches in allen Varianten zwei Laufscheiben 2 und 3 aufweist, die je einen Radialabschnitt 4 bzw. 5 aufweisen, die als Laufbahnen von in einem Käfig 6 geführten Wälzkörpern 7 dienen.

An der äußeren peripheren Kante schließt sich an den Radialabschnitten 4 und 5 je ein axial ausgerichtetes Bord 8 bzw. 9 an, welche gegeneinander angestellt sind, wobei das Bord 9 der einen Laufscheibe 3 das Bord 8 der anderen Laufscheibe 2 überlappt. Daher weist die radial innere Laufscheibe 2 einen geringeren Durchmesser auf als die sie überlappende radial äußere Laufscheibe 3.

An der inneren peripheren Kante des Radialabschnitts 4 der radial inneren Laufscheibe 2 schließt sich ein radial inneres und axial verlaufendes Bord 10 an, welches nach axial außen gerichtet und zu einem Flansch 11 verlängert ist. Das Bord 10 mit dem Flansch 11 ist entgegengesetzt zu dem genannten Bord 8 gerichtet, so dass die radial innere Laufscheibe 2 im Querschnitt etwa S-förmig ausgebildet ist.

Der Käfig 6 weist einen radial äußeren Abschnitt 12 auf, welcher sich gegen das radial äußere Bord 8 der radial inneren Laufscheibe 2 abstützt. Der Käfig 6 weist ferner einen radial inneren Abschnitt 13 auf, welcher zu einem nach axial außen gerichteten Bord 14 abgewinkelt ausgebildet ist.

Das Bord 9 der radial äußeren Laufscheibe 3 weist radial außen einen nasenartigen Vorsprung 15 auf, welcher entweder aus mehreren in Umfangsrichtung gleichmäßig voneinander beabstandeten Haltenasen besteht oder als ein sich um 360° erstreckender Rand ausgebildet ist. Der Vorsprung 15 dient zur Erleichterung des Zusammenfügens der beiden Laufscheiben 2, 3 und kann darüber hinaus als Schnappnase genutzt werden, mittels welcher das Axialwälzlager 1 in eine entsprechende Gehäuseausnehmung eines Getriebes eingerastet werden kann.

Darüber hinaus bildet eine bei der Herstellung des Vorsprungs 15 gebildete Vertiefung 16 einen weiteren Bestandteil der von den Einzelkomponenten des Axialwälzlagers gebildeten Labyrinthdichtung. Zu deren Komponenten gehören insbesondere die gegeneinander gerichteten radial äußeren Borde 8 und 9 der beiden Laufscheiben 2 und 3, das radial innere Bord 10 mit Flansch 11 der radial inneren Laufscheibe 2, der Käfig 6 mit seinem gegen das Bord 8 gerichteten züβeren Abschnitt 12 und mit seinem zum Bord 14 abgewinkeltem radial inneren Abschnitt 13, wobei dieses Bord 14 und dieser Flansch 11 die gleiche Ausrichtung aufweisen.

Gemeinsam ist allen Ausführungsformen noch, dass ein axial äußerer Abschnitt 17 der radial äußeren Laufscheibe 3 in eine zentrale Lageröffnung 18 mit Lagerachse 19 mündet.

In Fig. 1 ist ein erstes Ausführungsbeispiel dargestellt, bei dem die erwähnten Komponenten der Labyrinthdichtung durch eine weitere Komponente ergänzt sind. Bei dieser Ausführungsform ist der axial äußere Abschnitt 17 der radial äußeren Laufscheibe 3 nach axial innen zur Bildung eines Bordes 20 abgewinkelt. Dieses Bord 20 ist axial und radial vom radial inneren Bord 10 der kleineren Laufscheibe 2 beabstandet und überdeckt das Bord 14 des Käfigs 6 axial und radial vollständig. Zwischen dem Bord 20 und dem Bord 10 verbleibt nur ein geringer, vor allem radialer Spalt 21, in welchem Schmiermittel in das Axiallager 1 einströmen kann. Der weitaus größte Mengenanteil von Schmiermittel fließt aber an den als Leitblechen fungierenden Borden 10, 14, 20 vorbei, was mit den Pfeilen S und S' angedeutet ist.

In Fig. 2 ist ein zweites Ausführungsbeispiel eines erfindungsgemäßen Axialwälzlagers 1 gezeigt, das weitgehend dem in Fig. 1 dargestellten und beschriebenen Axialwälzlager entspricht. In Abweichung vom in Figur 1 dargestellten Ausführungsbeispiel ist der axial äußere Abschnitt 17 der radial äußeren Laufscheibe 3 zwar ebenfalls nach axial innen zur Bildung eines Bordes oder Flansches 22 abgewinkelt. Dieser Flansch 22 überdeckt axial aber nicht nur das Bord 14 des Käfigs 6 vollständig, sondern teilweise auch den Flansch 11 der radial inneren Laufscheibe 2. Zwischen den genannten Flansche 11 und 22 verbleibt ein schmaler Spalt 23 zum Schmiermitteleintritt, welcher sich axial erstreckt.

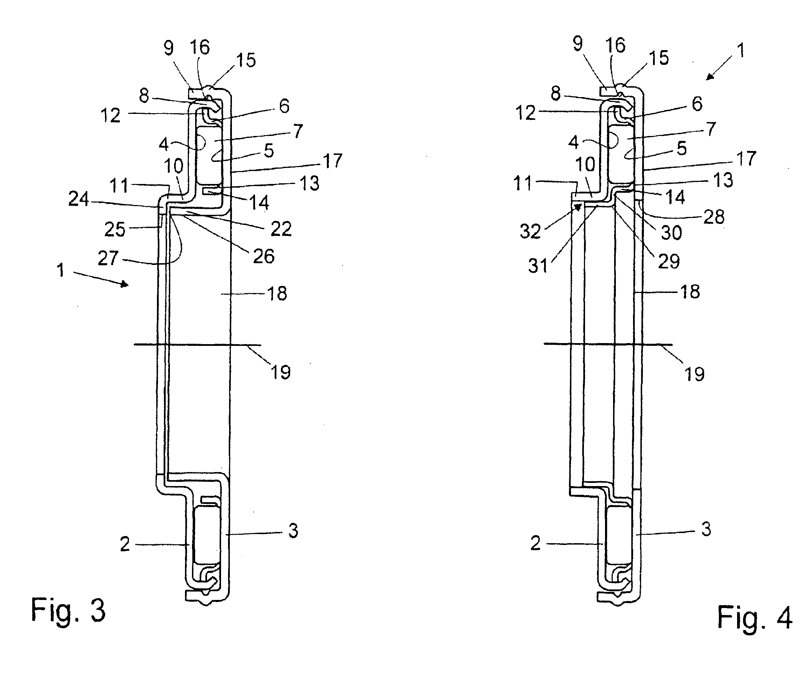

In Fig. 3 ist ein drittes Ausführungsbeispiel eines erfindungsgemäßen Axialwälzlagers 1 dargestellt, das weitgehend dem in Fig. 2 dargestellten und beschriebenen Axialwälzlager entspricht. Dabei ist ebenfalls der axial äußere Abschnitt 17 der radial äußeren Laufscheibe 3 nach axial innen zur Bildung eines Bordes oder Flansches 22 abgewinkelt und nicht nur das Bord 14 des Käfigs 6 vollständig, sondern teilweise auch der Flansch 11 der radial inneren Laufscheibe 2 überdeckt.

Der Flansch 11 ist zudem an seinem axialen Ende radial nach innen zu einem Rand 24 abgewinkelt, wobei eine Kante 25 des Randes 24 mit einer radialen Unterseite 26 des Flansches 22 auf gleicher radialer Höhe ist. Zwischen dem Rand 24 und dem Flansch 22 verbleibt ein radialer Spalt 27, in den Schmiermittel einströmen kann. Der weitaus überwiegende Teil des Schmiermittels wird aber an den als Leitbleche wirkenden Flansch 11 mit Rand 24 und Flansch 22 vorbeigeleitet.

In Fig. 4 ist ein viertes Ausführungsbeispiel eines erfindungsgemäßen Axialwälzlagers 1 dargestellt. Dieses weist eine radial innere Laufscheibe 2 auf, welche der in Fig. 1 und Fig. 2 dargestellten Laufscheibe 2 entspricht. Die radial äußere Laufscheibe 3 weist im Gegensatz zu denjenigen der Figuren 1 bis 3 keinen radial inneren Bord oder Flansch in Verlängerung des axial äußeren Abschnitts 17 auf. Der axial äußere Abschnitt 17 endet bei dieser Ausführungsform mit einer radial innen angeordneten geraden Stirnkante 28. Um dennoch die Funktion einer Labyrinthdichtung bzw. von Leitblechen zur Ablenkung des Schmiermittelstroms zu erhalten, ist der Käfig 6 noch stärker in das System eingebunden, und zwar dadurch, das das Bord 14 des radial unteren Abschnitts 13 des Käfigs 6 mit einer doppelten axial-radialen Abwinklung 29 versehen ist, welche aus einem radial nach innen weisenden Abschnitt 30 und aus einem axialem Flansch 31 besteht.

Der Flansch 31 des Käfigs 6 weist nur einen geringen radialen Abstand zum Flansch 11 der radial inneren Laufscheibe 2 auf. Zwischen Flansch 11 und Flansch 31 verbleibt ein Spalt 32, durch den Schmiermittel in das Axiallager einströmen kann. Es liegt jedoch auch im Rahmen der Erfindung, den Flansch 11 und den Flansch 31 spaltlos aneinander zu legen. Ebenfalls ist es möglich, den Flansch 31 axial so weit verlängert auszubilden, dass seine Stirnkante mit der Stirnkante des Flansches 11 fluchtet. Der axiale Abstand zwischen Flansch 11 und Flansch 31 wäre dann Null.

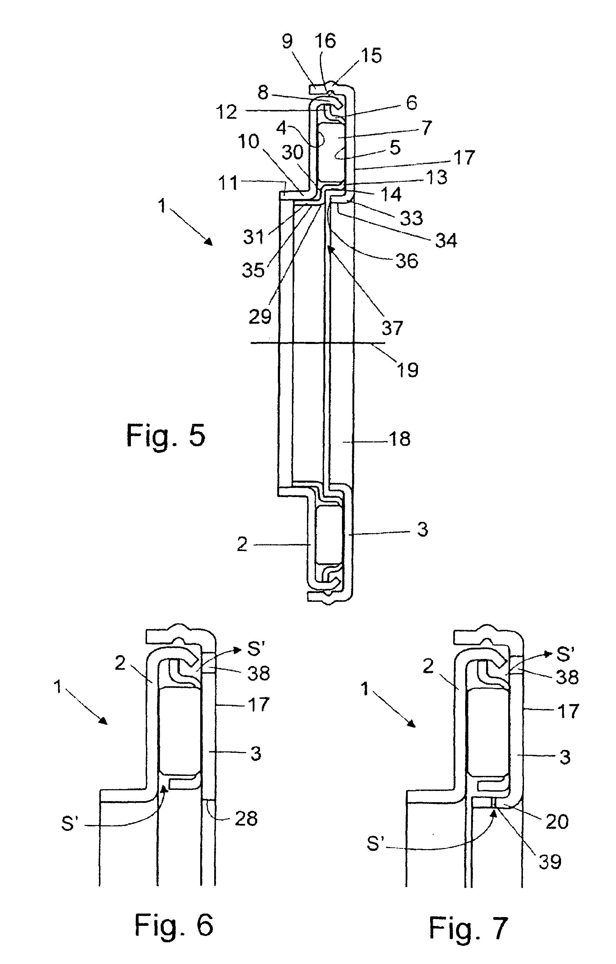

In Fig. 5 ist ein fünftes Ausführungsbeispiel eines erfindungsgemäßen Axialwälzlagers 1 dargestellt, dessen radial innere Laufscheibe 2 und dessen Käfig 6 mit Flansch 31 dem in Fig. 4 dargestellten Axialwälzlager entsprechen. Im Gegensatz zu diesem weist auch der axial äußere Abschnitt 17 der radial äußeren Laufscheibe 3 eine axiale nach innen gerichtete Abwinklung in Form eines Bordes 33 auf, dessen Unterkante 34 auf gleicher radialer Höhe angeordnet ist wie eine Unterkante 35 des Flansches 31 des Käfigs 6. Zwischen dem radial nach innen weisenden Abschnitt 30 des Bordes 14 des Käfigs 6 und einer Stirnkante 36 des Bordes 33 verbleibt ein Spalt 37, durch den ein geringer Teil des Schmiermittelstroms in das Axialwälzlager 1 einströmen kann. Der weitaus größte Teil wird durch den Flansch 11 des durchmesserkleineren Lagerringes 2, durch das Bord 31 des Käfigs 6 und durch das Bord 33 des durchmessergrößeren Lagerringes 3, welche als Leitbleche dienen, abgelenkt.

In Fig. 6 ist eine Teilansicht eines sechsten Ausführungsbeispiel eines erfindungsgemäßen Axialwälzlagers 1 dargestellt, welches bezüglich der Konfiguration der radial inneren Laufscheibe 2 und des Käfigs 6 den in den Figuren 1 und 2 dargestellten Ausführungsbeispielen entspricht. Die radial äußere Laufscheibe 3 weist hingegen eine Konfiguration auf, wie sie in Fig. 4 dargestellt und oben beschrieben wurde.

Demnach endet der axial äußere Abschnitt 17 der Laufscheibe 3 bei dieser Ausführungsform radial innen mit einer geraden Stirnkante 28. Zusätzlich ist in den axial äußeren Abschnitt 17 der Laufscheibe 3 eine Öffnung oder Bohrung 38 eingebracht. Hierbei kann eine einzige Bohrung 38 oder eine Vielzahl von Bohrungen 38 in den axial äußere Abschnitt 17 der durchmessergrößeren Laufscheibe 3 eingebracht sein. Dieses Konstruktionsdetail dient dazu, eine gegenüber den bislang beschriebenen Ausführungsbeispielen höhere Durchflussmenge an Schmiermittel durch das Axialwälzlager 1 zu erreichen, welches bei bestimmten Voraussetzungen vorteilhaft sein kann. Das in das Axialwälzlager 1 eindringende und dieses durch die Bohrung 38 verlassende Schmiermittel ist durch die Pfeile S' angedeutet. Die Anzahl und/oder die Durchmesser der Bohrungen 38 bestimmen unter anderem den pro Zeiteinheit durch das Axiallager leitbaren Schmiermittelstrom. Die zumindest eine Bohrung 38 leitet den Schmiermittelstrom zudem gezielt in eine bestimmte axiale Richtung.

In Fig. 7 ist eine Teilansicht eines siebten Ausführungsbeispiel eines erfindungsgemäßen Axialwälzlagers 1 dargestellt, bei dem ebenfalls in den axial äußeren Abschnitt 17 der durchmessergrößeren Laufscheibe 3 eine Öffnung oder Bohrung 38 eingebracht ist. Radial innen weist der axial äußere Abschnitt 17 der Laufscheibe 3 ein nach axial innen gerichtetes Bord 20 entsprechend der in Fig. 1 dargestellten Variante auf. Das Bord 20 weist eine radial verlaufende Bohrung 39 auf, welche einen geringeren Durchmesser als die Bohrung 38 im axial äußeren Abschnitt 17 der Laufscheibe 3 hat. Durch die Bohrung 39 kann Schmiermittel zusätzlich in das Axialwälzlager 1 eindringen und dieses durch die Bohrung 38 verlassen, welches durch die Pfeile S' angedeutet ist.

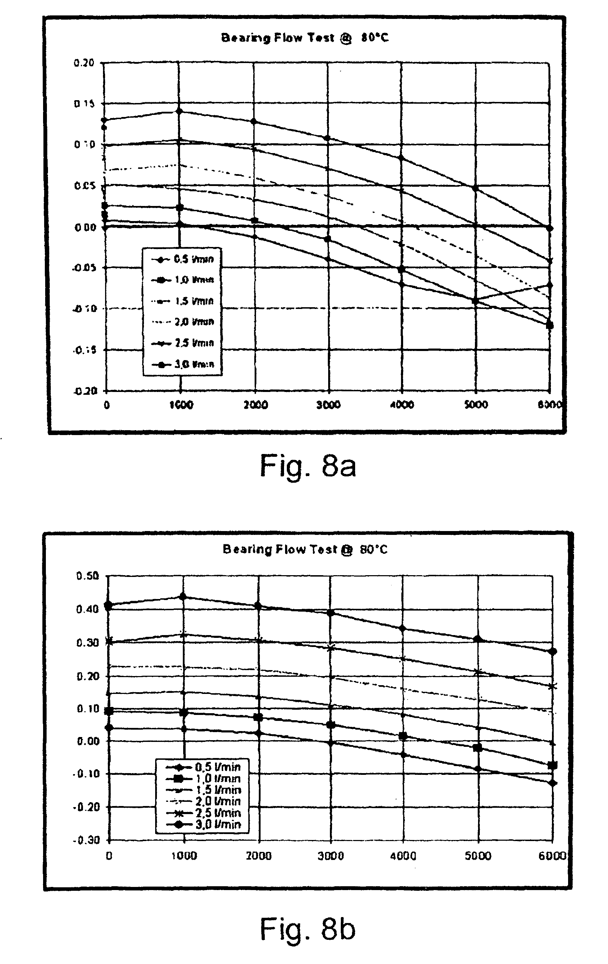

In den Figuren 8a und 8b sind tabellarische Messreihen dargestellt, welche jeweils auf der vertikalen Achse den in Bar gemessenen Öldruck und auf der horizontalen Achse eine Drehgeschwindigkeit in Umdrehungen pro Minute wiedergeben. Die Messungen wurden bei einer Temperatur von 80° C durchgeführt. In Figur 8a sind dabei Werte angegeben, welche einer geringen Durchflussrate an Schmiermitteln entsprechen, während in der Tabelle nach Figur 8b solche Werte erhalten wurden, die einer höheren Durchflussrate darstellen. Diese Werte wurden bei durchgeführten praktischen Testreihen mit verschieden gestalteten Axialwälzlagern 1 erhalten, wobei sich ergab, dass je nach Anforderungsprofil die Axialwälzlager leicht angepasst werden können, nämlich dadurch, dass verschiedene der oben beschriebenen Komponenten bzw. Varianten der Labyrinthdichtung eingesetzt oder weggelassen werden. So geben die in Fig. 8a angegebenen Werte einer relativ hohen Durchflussrate Messreihen wieder, welche mit einem Axialwälzlager gemäß Fig. 6 durchgeführt wurden, während die in Fig. 8b dargestellten Werte einer relativ geringen Durchflussrate mit einem Axialwälzlager 1 gemäß Fig. 1 erhalten wurden.

Soll die Durchflussmenge durch das Axiallager 1 erhöht werden, so kann auch vorgesehen werden, dass die Anzahl der verwendeten Wälzkörper 7 reduziert wird. Hierbei ist es möglich, die Taschen des Käfigs 6, in welche Wälzkörper 7 in Form von Nadeln oder Rollen eingesetzt sind, nicht bis zur maximal möglichen Anzahl zu bestücken. Beispielsweise können 2, 4, 8 oder 16 Taschen des Käfigs 6 leer bleiben und nur die restlichen Taschen mit Wälzkörpern 6 gefüllt werden.

### Bezugszeichenliste

- 1: Axialwälzlager
- 2: Laufscheibe
- 3: Laufscheibe
- 4: Radialabschnitt
- 5: Radialabschnitt
- 6: Käfig
- 7: Wälzkörper
- 8: Bord
- 9: Bord
- 10: Bord
- 11: Flansch
- 12: Abschnitt
- 13: Abschnitt
- 14: Bord
- 15: Vorsprung
- 16: Vertiefung
- 17: Abschnitt
- 18: Lageröffnung
- 19: Lagerachse
- 20: Bord
- 21: Spalt
- 22: Flansch
- 23: Spalt
- 24: Rand
- 25: Kante
- 26: Unterseite
- 27: Spalt
- 28: Stirnkante
- 29: Abwinklung
- 30: Abschnitt
- 31: Flansch
- 32: Spalt
- 33: Bord
- 34: Unterkante
- 35: Unterkante
- 36: Stirnkante
- 37: Spalt
- 38: Bohrung
- 39: Bohrung
- S: Pfeil, Strömungsrichtung
- S': Pfeil, Strömungsrichtung

## Patentansprüche

1. Axialwälzlager (1), bestehend aus einem Wälzkörper (7) enthaltenden Käfig (6), der zwischen zwei Laufscheiben (2, 3) angeordnet ist, wobei die Laufscheiben (2, 3) je einen eine Laufbahn bildenden Radialabschnitt (4, 5) und je einen sich daran anschließenden axial ausgerichteten radial äußeren Bord (8, 9) aufweisen, die sich in axialer Richtung überlappen, wobei die radial äußere Laufscheibe (3) einen größeren Durchmesser aufweist als die radial innere Laufscheibe (2), und wobei wenigstens die radial innere Laufscheibe (2) ein radial inneres, axial verlaufendes Bord aufweist, welches sich dem die Laufbahn bildenden Radialabschnitt (4) anschließt, **dadurch gekennzeichnet, dass** das radial innere Bord (10) der inneren Laufscheibe (2) nach axial außen gerichtet und zu einem Flansch (11) verlängert ist, dass der Käfig (6) einen radial äußeren Abschnitt (12) aufweist, welcher sich gegen das radial äußere Bord (8) der radial inneren Laufscheibe (2) abstützt, und dass der Käfig (6) einen radial inneren Abschnitt (13) aufweist, welcher zu einem nach axial außen gerichteten Bord (14) abgewinkelt ausgebildet ist, wobei der Flansch (11) der radial inneren Laufscheibe (2) und das Bord (14) des Käfigs (6) zur Bildung einer Labyrinthdichtung die gleiche axiale Richtung aufweisend ausgebildet sind.

2. Axialwälzlager nach Anspruch 1, **dadurch gekennzeichnet, dass** ein axial äußerer Abschnitt (17) der radial äußeren Laufscheibe (3) nach axial innen zur Bildung eines Bordes (20; 22; 33) abgewinkelt ist, wobei dieses Bord (20; 22; 33) wenigstens radial vom radial inneren Bord (10) der inneren Laufscheibe (2) beabstandet ist und das nach axial außen gerichtete Bord (14) des Käfigs (6) überdeckt, wobei zwischen den jeweiligen Borden (10, 20; 22; 33) ein Spalt (21; 23; 27; 37) verbleibt.

3. Axialwälzlager nach Anspruch 2, **dadurch gekennzeichnet, dass** das als Flansch (22) ausgebildete Bord (22) der radial äußeren Laufscheibe (3) den Flansch (11) der radial inneren Laufscheibe (2) zumindest teilweise axial und radial überdeckt, wobei zwischen den Flanschen (11, 22) ein Spalt (23; 27) ausgebildet ist.

4. Axialwälzlager nach Anspruch 3, **dadurch gekennzeichnet, dass** der Flansch (11) der radial inneren Laufscheibe (2) an seinem axialen Ende radial nach innen zu einem Rand (24) abgewinkelt ist, wobei eine Kante (25) dieses Randes (24) und eine radiale Unterseite (26) des Flansches (22) der radial äußeren Laufscheibe (3) auf etwa gleicher radialer Höhe sind, wobei zwischen dem Rand (24) der radial inneren Laufscheibe (2) und dem Flansch (22) der radial äußeren Laufscheibe (3) ein Spalt (27) ausgebildet ist.

5. Axialwälzlager zumindest nach Anspruch 1, **dadurch gekennzeichnet, dass** das Bord (14) des radial inneren Abschnitts (13) des Käfigs (6) mit einer doppelten axial-radialen Abwinklung (29) versehen ist, welche aus einem radial nach innen weisenden Abschnitt (30) und aus einem axialem Flansch (31) besteht, wobei dieser Flansch (31) den Flansch (11) der radial inneren Laufscheibe (2) zumindest teilweise radial und axial überdeckt.

6. Axialwälzlager nach Anspruch 5, **dadurch gekennzeichnet, dass** der axiale Abstand zwischen dem Flansch (11) der radial inneren Laufscheibe (2) und dem Flansch (31) des Käfigs (6) gleich Null ist.

7. Axialwälzlager nach Anspruch 5 oder 6, **dadurch gekennzeichnet, dass** der axial äußere Abschnitt (17) der radial äußeren Laufscheibe (3) eine axial nach innen gerichtete Abwinklung in Form eines Bordes (33) aufweist, dessen Unterkante (34) auf gleicher radialer Höhe angeordnet ist wie eine Unterkante (35) des Flansches (31) des Käfigs (6).

8. Axialwälzlager nach Anspruch 7, **dadurch gekennzeichnet, dass** zwischen dem radial nach innen weisenden Abschnitt (30) des Bordes (14) des Käfigs (6) und einer Stirnkante (36) des Bordes (33) der radial äußeren Laufscheibe (3) ein Spalt (37) ausgebildet ist.

9. Axialwälzlager zumindest nach Anspruch 2, **dadurch gekennzeichnet, dass** in den axial äußeren Abschnitt (17) der radial äußeren Laufscheibe (3) wenigstens eine Öffnung oder Bohrung (38) eingebracht ist.

10. Axialwälzlager zumindest nach Anspruch 2, **dadurch gekennzeichnet, dass** das nach axial innen gerichtete Bord (20) der radial äußeren Laufscheibe (3) wenigstens eine radial verlaufende Bohrung (39) aufweist.

11. Axialwälzlager nach Anspruch 9 und 10, **dadurch gekennzeichnet, dass** die Bohrung (39) des nach axial innen gerichteten Bordes (20) der radial äußeren Laufscheibe (3) einen geringeren Durchmesser als die Bohrung (38) im axial äußeren Abschnitt (17) dieser Laufscheibe (3) aufweist.

12. Axialwälzlager zumindest nach Anspruch 1, **dadurch gekennzeichnet, dass** das radial äußere und axial ausgerichtete Bord (9) der radial äußeren Laufscheibe (3) radial außen einen nasenartigen Vorsprung (15) aufweist, welcher aus mehreren in Umfangsrichtung gleichmäßig voneinander beabstandeten Haltenasen besteht oder als ein sich um 360° erstreckender radialer Rand ausgebildet ist.

13. Axialwälzlager nach zumindest einem der Ansprüche 1 bis 12, **dadurch gekennzeichnet, dass** die Wälzkörper (7) Nadeln oder Rollen sind.

14. Axialwälzlager nach zumindest einem der Ansprüche 1 bis 13, **dadurch gekennzeichnet, dass** der Käfig (6) Taschen mit einer Anzahl N aufweist, wobei die Anzahl der in den Taschen eingesetzten Wälzkörper (7) der Anzahl N entspricht.

15. Axialwälzlager nach zumindest einem der Ansprüche 1 bis 13, **dadurch gekennzeichnet, dass** der Käfig (6) Taschen mit einer Anzahl N auf weist, wobei die Anzahl der in den Taschen eingesetzten Wälzkörper (7) N - n beträgt, wobei n ≥ 1.

## Claims

1. Axial rolling bearing (1) consisting of a cage (6) which contains rolling bodies (7) and is arranged between two running discs (2, 3), the running discs (2, 3) having in each case a radial portion (4, 5) forming a raceway and in each case an axially oriented radially outer rim (8, 9) adjoining the latter, which rims overlap one another in the axial direction, the radially outer running disc (3) having a larger diameter than the radially inner running disc (2), and at least the radially inner running disc (2) having a radially inner axially running rim which adjoins the radial portion (4) forming the raceway, **characterized in that** the radially inner rim (10) of the inner running disc (2) is directed axially outwards and is prolonged to form a flange (11), **in that** the cage (6) has a radially outer portion (12) which is supported against the radially outer rim (8) of the radially inner running disc (2), and **in that** the cage (6) has a radially inner portion (13) which is designed so as to be angled with respect to a rim (14) directed axially outwards, the flange (11) of the radially inner running disc (2) and the rim (14) of the cage (6) being designed so as to have the same axial direction in order to form a labyrinth seal.

2. Axial rolling bearing according to Claim 1, **characterized in that** an axially outer portion (17) of the radially outer running disc (3) is angled axially inwards in order to form a rim (20; 22; 33), said rim (20; 22; 33) being spaced apart at least radially from the radially inner rim (10) of the inner running disc (2) and covering the axially outward-directed rim (14) of the cage (6), a gap (21; 23; 27; 37) remaining between the respective rims (10, 20; 22; 33).

3. Axial rolling bearing according to Claim 2, **characterized in that** the rim (22), designed as a flange (22), of the radially outer running disc (3) covers the flange (11) of the radially inner running disc (2) at least partially axially and radially, a gap (23; 27) being formed between the flanges (11, 22).

4. Axial rolling bearing according to Claim 3, **characterized in that** the flange (11) of the radially inner running disc (2) is angled at its axial end radially inwards to form a margin (24), one edge (25) of this margin (24) and a radial underside (26) of the flange (22) of the radially outer running disc (3) being at approximately the same radial height, and a gap (27) being formed between the margin (24) of the radially inner running disc (2) and the flange (22) of the radially outer running disc (3).

5. Axial rolling bearing at least according to Claim 1, **characterized in that** the rim (14) of the radially inner portion (13) of the cage (6) is provided with double axial and radial angling (29) which consists of a portion (30) pointing radially inwards and of a axial flange (31), this flange (31) covering the flange (11) of the radially inner running disc (2) at least partially radially and axially.

6. Axial rolling bearing according to Claim 5, **characterized in that** the axial spacing between the flange (11) of the radially inner running disc (2) and the flange (31) of the cage (6) is equal to zero.

7. Axial rolling bearing according to Claim 5 or 6, **characterized in that** the axially outer portion (17) of the radially outer running disc (3) has an axially inward-directed angling in the form of a rim (33), the lower edge (34) of which is arranged at the same radial height as a lower edge (35) of the flange (31) of the cage (6).

8. Axial rolling bearing according to Claim 7, **characterized in that** a gap (37) is formed between the radially inward-pointing portion (30) of the rim (14) of the cage (6) and an end edge (36) of the rim (33) of the radially outer running disc (3).

9. Axial rolling bearing at least according to Claim 2, **characterized in that** at least one orifice or bore (38) in introduced into the axially outer portion (17) of the radially outer running disc (3).

10. Axial rolling bearing at least according to Claim 2, **characterized in that** the axially inward-directed rim (20) of the radially outer running disc (3) has at least one radially running bore (39).

11. Axial rolling bearing according to Claim 9 and 10, **characterized in that** the bore (39) of the axially inward-directed rim (20) of the radially outer running disc (3) has a smaller diameter than the bore (38) in the axially outer portion (17) of this running disc (3).

12. Axial rolling bearing at least according to Claim 1, **characterized in that** the radially outer and axially oriented rim (9) of the radially outer running disc (3) has, radially on the outside, a nose-like projection (15) which consists of a plurality of holding noses uniformly spaced apart from one another in the circumferential direction or is designed as a radial margin extending over 360°.

13. Axial rolling bearing according to at least one of Claims 1 to 12, **characterized in that** the rolling bodies (7) are needles or rollers.

14. Axial rolling bearing according to at least one of Claims 1 to 13, **characterized in that** the cage (6) has pockets with a number N, the number of rolling bodies (7) inserted in the pockets corresponding to the number N.

15. Axial rolling bearing according to at least one of Claims 1 to 13, **characterized in that** the cage (6) has pockets with a number N, the number of rolling bodies (7) inserted in the pockets amounting to N-n, where n ≥ 1.

## Revendications

1. Palier à roulement axial (1), constitué d'une cage (6) contenant des corps de roulement (7), qui est disposée entre deux disques de roulement (2, 3), les disques de roulement (2, 3) présentant chacun une portion radiale (4, 5) formant une piste de roulement et un bord radialement extérieur (8, 9) orienté axialement s'y raccordant, lesquels se chevauchent dans la direction axiale, le disque de roulement radialement extérieur (3) présentant un plus grand diamètre que le disque de roulement radialement intérieur (2), et au moins le disque de roulement radialement intérieur (2) présentant un bord s'étendant axialement, radialement intérieur, qui se raccorde à la portion radiale (4) formant la piste de roulement, **caractérisé en ce que** le bord radialement intérieur (10) du disque de roulement intérieur (2) est orienté axialement vers l'extérieur et est prolongé jusqu'à une bride (11), **en ce que** la cage (6) présente une portion radialement extérieure (12) qui s'appuie contre le bord radialement extérieur (8) du disque de roulement radialement intérieur (2), et **en ce que** la cage (6) présente une portion radialement intérieure (13) qui est réalisée sous forme coudée par rapport à un bord (14) orienté axialement vers l'extérieur, la bride (11) du disque de roulement radialement intérieur (2) et le bord (14) de la cage (6) étant réalisés en présentant la même direction axiale en vue de former un joint à labyrinthe.

2. Palier à roulement axial selon la revendication 1, **caractérisé en ce qu'**une portion axialement extérieure (17) du disque de roulement radialement extérieur (3) est coudée axialement vers l'intérieur pour former un bord (20 ; 22 ; 33), ce bord (20 ; 22 ; 33) étant espacé au moins radialement du bord radialement intérieur (10) du disque de roulement intérieur (2) et recouvrant le bord orienté axialement vers l'extérieur (14) de la cage (6), un espace (21 ; 23 ; 27 ; 37) subsistant entre les bords respectifs (10, 20 ; 22 ; 33).

3. Palier à roulement axial selon la revendication 2, **caractérisé en ce que** le bord (22) réalisé sous forme de bride (22) du disque de roulement radialement extérieur (3) recouvre au moins partiellement, axialement et radialement la bride (11) du disque de roulement radialement intérieur (2), un espace (23 ; 27) étant réalisé entre les brides (11, 22).

4. Palier à roulement axial selon la revendication 3, **caractérisé en ce que** la bride (11) du disque de roulement radialement intérieur (2) est coudée au niveau de son extrémité axiale radialement vers l'intérieur jusqu'à un bord (24), une arête (25) de ce bord (24) et un côté inférieur radial (26) de la bride (22) du disque de roulement radialement extérieur (3) étant approximativement à la même hauteur radiale, un espace (27) étant réalisé entre le bord (24) du disque de roulement radialement intérieur (2) et la bride (22) du disque de roulement radialement extérieur (3).

5. Palier à roulement axial selon au moins la revendication 1, **caractérisé en ce que** le bord (14) de la portion radialement intérieure (13) de la cage (6) est pourvu d'un coude double axial-radial (29) qui se compose d'une portion (30) tournée radialement vers l'intérieur et d'une bride axiale (31), cette bride (31) recouvrant au moins partiellement axialement et radialement la bride (11) du disque de roulement radialement intérieur (2).

6. Palier à roulement axial selon la revendication 5, **caractérisé en ce que** la distance axiale entre la bride (11) du disque de roulement radialement intérieur (2) et la bride (31) de la cage (6) est nulle.

7. Palier à roulement axial selon la revendication 5 ou 6, **caractérisé en ce que** la portion axialement extérieure (17) du disque de roulement radialement extérieur (3) présente un coude orienté axialement vers l'intérieur en forme de bord (33), dont l'arête inférieure (34) est disposée à la même hauteur radiale qu'une arête inférieure (35) de la bride (31) de la cage (6).

8. Palier à roulement axial selon la revendication 7, **caractérisé en ce qu'**un espace (37) est réalisé entre la portion tournée radialement vers l'intérieur (30) du bord (14) de la cage (6) et une arête frontale (36) du bord (33) du disque de roulement radialement extérieur (3).

9. Palier à roulement axial selon la revendication 2, **caractérisé en ce qu'**au moins une ouverture ou un alésage (38) est pratiqué dans la portion axialement extérieure (17) du disque de roulement radialement extérieur (3).

10. Palier à roulement axial selon au moins la revendication 2, **caractérisé en ce que** le bord orienté axialement vers l'intérieur (20) du disque de roulement radialement extérieur (3) présente au moins un alésage (39) s'étendant radialement.

11. Palier à roulement axial selon les revendications 9 et 10, **caractérisé en ce que** l'alésage (39) du bord orienté axialement vers l'intérieur (20) du disque de roulement radialement extérieur (3) présente un plus petit diamètre que l'alésage (38) dans la portion axialement extérieure (17) de ce disque de roulement (3).

12. Palier à roulement axial selon au moins la revendication 1, **caractérisé en ce que** le bord orienté radialement à l'extérieur et axialement (9) du disque de roulement radialement extérieur (3) présente radialement à l'extérieur une saillie de type nez (15) qui se compose de plusieurs nez de retenue espacés uniformément les uns des autres dans la direction périphérique, ou qui est réalisée sous forme de bord radial s'étendant sur 360°.

13. Palier à roulement axial selon au moins l'une quelconque des revendications 1 à 12, **caractérisé en ce que** les corps de roulement (7) sont des aiguilles ou des rouleaux.

14. Palier à roulement axial selon au moins l'une quelconque des revendications 1 à 13, **caractérisé en ce que** la cage (6) présente des cavités avec un nombre N, le nombre des corps de roulement (7) introduits dans les cavités correspondant au nombre N.

15. Palier à roulement axial selon au moins l'une quelconque des revendications 1 à 13, **caractérisé en ce que** la cage (6) présente des cavités avec un nombre N, le nombre des corps de roulement (7) introduits dans les cavités valant N - n, avec n > 1.
